# EUROPÄISCHE PATENTSCHRIFT

(11) **EP 3 077 097 B1**
(45) Veröffentlichungstag und Bekanntmachung des Hinweises auf die Patenterteilung: **29.08.2018**
(21) Anmeldenummer: 14805930.6
(22) Anmeldetag: 03.12.2014
(51) Int. Cl.: B01J 8/44, B01J 4/00, F16K 15/06, B01J 8/18

(54) **GASVERTEILERDÜSE UND REAKTOR**
GAS DISTRIBUTION NOZZLE AND REACTOR
BUSE DE DISTRIBUTION DE GAZ ET RÉACTEUR

(30) Priorität: 04.12.2013 EP 13195614
(43) Veröffentlichungstag der Anmeldung: 12.10.2016
(73) Patentinhaber: BASF SE, 67056 Ludwigshafen am Rhein (DE)
(72) Erfinder: GARELLA, Dominik, 69168 Wiesloch (DE); BACHMANN, Kati, 68309 Mannheim (DE)
(86) Internationale Anmeldenummer: PCT/EP2014/076328
(87) Internationale Veröffentlichungsnummer: WO 2015/082506

(56) Entgegenhaltungen:
- DE-A1- 4 443 292
- FR-A- 1 233 498
- GB-A- 668 325
- JP-A- S63 252 540
- NL-C2- 1 004 621
- US-A- 5 806 206

## Beschreibung

Die Erfindung betrifft eine Gasverteilerdüse, umfassend einen senkrecht nach oben gerichteten Gaszulauf sowie einen Schwebekörper, mit dem eine Austrittsöffnung aus dem Gaszulauf verschließbar ist, wenn kein Gas strömt oder wenn der Druck in Strömungsrichtung nach der Gasverteilerdüse größer ist als vor der Gasverteilerdüse.

Gasverteilerdüsen werden zum Beispiel eingesetzt, um Gas in ein Festkörperbett einzuleiten. Festkörperbetten umfassen üblicherweise ein Granulat oder ein Pulver, das von dem Gas durchströmt wird. Festkörperbetten, in denen eine Gasverteilerdüse zum Einsatz kommt, sind zum Beispiel Wirbelschichten, Fließbetten oder Wanderbetten.

Die Gaseinleitung in das Festkörperbett über Gasverteilerdüsen erfolgt üblicherweise über eine Windbox, aus der das Gas durch geeignete Gasverteiler in das Festkörperbett eingeleitet wird. Hierbei ist es notwendig, die Gasverteiler so zu gestalten, dass keine Partikel aus dem Festkörperbett durch die Gasverteiler in die Windbox gelangen können.

Gasverteiler können zum Beispiel Sparger, perforierte Platten, gekrümmte perforierte Platten oder Düsenplatten sein. Das Gas soll durch den Gasverteiler gleichmäßig über den gesamten Querschnitt verteilt werden. Dazu muss der Gasverteiler im Verhältnis zum Festkörperbettdruckverlust einen Mindestdruckverlust aufweisen. Für Wirbelschichten gilt hier die Faustregel, dass der Druckverlust über den Gasverteiler mindestens 20 % bis 30 % des Wirbelbettdruckverlustes sein muss. Beachtet man bei der Auslegung großtechnischer Wirbelschichtanlagen, dass diese auch im Teillastfall betrieben werden sollen, also wenn weniger Gas durch den Gasverteilerboden strömt, so bedeutet das für den Volllastfall immer, dass der Druckverlust über den Gasverteilerboden deutlich über dem Soll von 20% bis 30% des Wirbelbettdruckverlustes liegt, wodurch sich erhöhte Betriebskosten einstellen.

Nachteilig an Spargern ist, dass hiermit besonders im unteren Teil des Festkörperbettes keine gleichmäßige Gasverteilung über den gesamten Querschnitt erreicht werden kann. Perforierte Platten ermöglichen zwar eine Gasgleichverteilung über den gesamten Querschnitt, hier ist jedoch damit zu rechnen, dass Partikel u.U. im stationären Betrieb bereits durch die Löcher nach unten in die Windbox rieseln. Um dem entgegen zu wirken verwendet der Fachmann Düsenplatten. Hierbei handelt es sich um Gasverteilerdüsen, die auf einer Bodenplatte nebeneinander angeordnet sind. Das Design dieser Düsen verhindert im Normalbetrieb das Zurückrieseln von Partikeln in die Windbox. In der Praxis hat sich jedoch gezeigt, dass es beim Betrieb von Festkörperbetten Zustände gibt, bei denen auch durch eine Gasverteilerdüse wie vorstehend beschrieben Partikel zurückrieseln können. Solch ein Zustand kann beispielsweise der plötzliche Ausfall der Gaszufuhr oder aber eine Druckumkehr im Festkörperbett sein. Unter Druckumkehr versteht man einen höheren Druck in Strömungsrichtung hinter der Gasverteilerdüse als davor.

Dieser Zustand kann sich einstellen, wenn aufgrund von Sicherheitsmaßnahmen der Abgasweg des Festkörperbettes plötzlich geschlossen wird, der Gaszulauf jedoch noch kurze Zeit geöffnet bleibt. Tritt dieser Fall ein, so entsteht kurzfristig ein höherer Druck nach der Gasverteilerdüse, was einen Partikelstrom durch die Düsen in die Windbox zur Folge hat. Weiterhin ist es auch möglich, dass bei einem Kompressorausfall im Kreisgassystem eines Reaktors Gas durch die Düsen zurückströmt und hierbei Partikel mitreißt.

Partikel, die in die Windbox gelangen, werden von der Gasströmung in der Windbox mitgerissen und können auf diese Weise zu einer unerwünschten Erosion an den Gasverteilerdüsen führen. Dieser Prozess beschleunigt sich je stärker die Gasverteilerdüsen beschädigt werden. Ist der Schaden so groß, dass keine Gasgleichverteilung über den Querschnitt mehr erreicht wird, muss die Anlage abgestellt werden. Zudem können Partikel einzelne Düsen verstopfen, so dass durch diese kein Gas mehr in das Festkörperbett strömen kann, was zu einer Verungleichmäßigung der Strömungsverteilung über den Querschnitt führt. Eine Gasgleichverteilung ist zum Beispiel bei der Durchführung von exothermen Reaktionen in einem Wirbelschichtreaktor wichtig, da hierdurch eine Temperaturgleichverteilung erzielt wird. Die Bildung von heißen Zonen ist zumeist unerwünscht, da es dadurch beispielsweise zu Kapazitätseinbußen oder unsicheren Zuständen kommen kann.

Weiterhin besteht auch die Möglichkeit, dass durch Adsorption der eingesetzten Gase bei Kapillarkondensation das Material des Festkörperbetts korrosiv wirkt. Dies ist insbesondere dann der Fall, wenn als Material für das Festkörperbett ein Katalysator eingesetzt wird und die als Edukte eingesetzten Gase oder gegebenenfalls auch das Reaktionsprodukt korrosiv auf das Material der Windbox wirken. Kapillarkondensation tritt dabei insbesondere auf, wenn die Zufuhrtemperatur in die Windbox kleiner ist als die Betriebstemperatur.

Insbesondere dann, wenn das Material für das Festkörperbett ein Katalysator ist und zudem bereits ein reaktionsfähiges Gemisch in die Windbox eingeleitet wird, kann der Kontakt mit in die Windbox zurückgeströmten Partikeln zu einer ungewollten Reaktion führen. Insbesondere bei exothermen Reaktionen führt dies zu einer Temperaturerhöhung in der Windbox, da die entstehende Wärme üblicherweise nicht ausreichend abgeführt werden kann.

Weiterhin ist es notwendig, die Windbox regelmäßig zu reinigen und die Partikel aus der Windbox zu entfernen, wozu es jedes Mal erforderlich ist, den Prozess zu unterbrechen, wodurch die Effizienz des Verfahrens reduziert wird und die Betriebskosten steigen.

Um zu vermeiden, dass Partikel aus einem Festkörperbett durch Gasverteilerdüsen rückströmen können, ist zum Beispiel aus US 3,386,182 bekannt, eine zentrale Gasverteilerdüse einzusetzen, die ein Schließelement aufweist, das mit Federunterstützung geschlossen wird, wenn die Gasströmung unterbrochen wird.

Aus US 4,387,667 ist ein Schwebekörper bekannt, der genutzt wird, um einen konstanten Druckverlust einzustellen. Der Schwebekörper ist dabei in Form eines auf der Spitze stehenden Kegels ausgebildet und weist über seinen Umfang verteilt Rippen auf, mit denen der Schwebekörper bei zu geringer Gasströmung an einer Hülse anliegt. Die Hülse weist dabei eine konische Querschnittserweiterung in Richtung der Gasströmung auf. Nicht möglich ist es mit dem hier beschriebenen Schwebekörper eine Rückströmung von Partikeln zu verhindern.
Ein Schwebekörper in Form einer Kugel ist aus US 3,921,663 bekannt. Diese sitzt bei zu geringer Gasströmung auf einem Kamin auf. Oberhalb des Kamins ist eine Hülse vorgesehen, die eine konische Querschnittserweiterung aufweist. Hierdurch wird sichergestellt, dass die Kugel bei abnehmender Gasströmung auf dem Kamin aufsitzt.
Nachteil aller aus dem Stand der Technik bekannten Schwebekörper ist, dass diese entweder nicht ermöglichen, einen unabhängig vom die Düse passierenden Gasvolumenstrom konstanten Druckverlust einzustellen, um einen gleichmäßigen Betrieb des Festkörperbettes zu ermöglichen, oder dass durch den Schwebekörper nicht verhindert werden kann, insbesondere bei geringer Gasströmung oder Strömungsumkehr, dass Partikel im Festkörperbett zurückgehalten werden. Ein weiterer Nachteil ist, dass die Schwebekörper für den gewünschten Druckverlust im Allgemeinen sehr schwer sein müssen, was zu instabilen Betriebsverhältnissen führt.

GB668325, US5806206, NL1004621, JP S63 252540, FR1233498 und D4443292 offenbaren Verteilerdüsen, die ein bewegbare Element aufweisen.

Aufgabe der vorliegenden Erfindung ist es daher, eine Gasverteilerdüse bereitzustellen, die die Einstellung eines konstanten Druckverlusts auch bei schwankendem Gasstrom erlaubt und zudem verhindert, dass bei einem kompletten oder teilweisen Wegfall der Gaszufuhr oder bei einer Druckumkehr am Boden Partikel aus dem Festkörperbett rückströmen können.
Gelöst wird die Aufgabe durch eine Gasverteilerdüse, umfassend einen senkrecht nach oben gerichteten Gaszulauf sowie einen Schwebekörper, mit dem eine Austrittsöffnung aus dem Gaszulauf verschließbar ist, wenn die Gasgeschwindigkeit einen bestimmten Wert unterschreitet, kein Gas strömt oder eine Druckumkehr auftritt, wobei der Schwebekörper auf seiner dem Gaszulauf abgewandten Seite einen einseitig offenen Hohlraum umfasst und einen Schwerpunkt aufweist, der unterhalb des Kraftangriffspunktes der Widerstandskraft der Gasströmung liegt.
Durch den Schwerpunkt unterhalb des Kraftangriffspunktes der Widerstandskraft der Gasströmung wird vermieden, dass sich instabile Betriebszustände einstellen können. Wenn der Schwebekörper beginnt zu schwingen oder durch eine ungleichmäßige Gasströmung zu kippen beginnt, richtet er sich aufgrund des Schwerpunkts unterhalb des Kraftangriffspunktes wieder auf und stabilisiert sich. Hierdurch wird auch vermieden, dass der Schwebekörper verkanten kann, so dass die Schließfunktion nicht beeinträchtigt wird. Weiterhin ist es mit dem Schwebekörper möglich einen konstanten Druckverlust unabhängig von der Gaszufuhrmenge einzustellen.

Der Kraftangriffspunkt der Widerstandskraft der Gasströmung im Rahmen der vorliegenden Erfindung ist der Punkt, an dem sich die über die Oberfläche des Schwebekörpers integrierte von der Gasströmung ausgeübte Spannung zu einer resultierenden Kraft zusammenfassen lässt. Dieser Punkt ist dem Fachmann als Druckpunkt bekannt und nicht notwendigerweise der Flächenschwerpunkt der Oberfläche des Schwebekörpers. Die Lage des Kraftangriffspunktes der Widerstandskraft der Strömung hängt dabei von den Druck- und Schubspannungen auf die Mantelfläche des Schwebekörpers ab. Der dynamische Druck ist weiterhin abhängig von der lokalen Strömungsgeschwindigkeit, die sich aus dem Betriebsvolumenstrom durch die Düse, der Gestalt der Düse und des Schwebekörpers und der Position des Schwebekörpers in der Düse ergibt.

Wenn der Schwebekörper so gestaltet ist, dass der Schwerpunkt und der Druckpunkt auf der gleichen Achse liegen, zum Beispiel bei einem punktsymmetrischen oder rotationssymmetrischen Schwebekörper, kann der Kraftangriffspunkt der Widerstandskraft der Gasströmung im Rahmen der vorliegenden Erfindung alternativ auch als der Punkt bestimmt werden, an dem sich die über die Oberfläche des Schwebekörpers integrierten von der Gasströmung ausgeübten Spannungen als Kraftvektor dergestalt zusammenfassen lassen, dass kein Drehmoment bezüglich dieses Punktes vorliegt.

Der bestimmte Wert der Gasgeschwindigkeit, bei dessen Unterschreiten die Austrittsöffnung aus dem Gaszulauf verschlossen wird, ist der Wert, bei dem die Gasgeschwindigkeit so gering ist, dass der Schwebekörper nicht mehr getragen wird. Dieser Wert ist abhängig von der Geometrie der Gaszufuhrdüse und des Schwebekörpers sowie der Masse des Schwebekörpers und den Eigenschaften des strömenden Gases, zum Beispiel Dichte, Viskosität oder Druck.

Eingesetzt wird die erfindungsgemäße Gasverteilerdüse insbesondere in Anlagen mit einem Festkörperbett, beispielsweise einer Wirbelschicht, einem Fließbett oder einem Wanderbett. Die Gestaltung der Gasverteilerdüse verschließt die Öffnung bei komplettem oder teilweisem Wegfall der Gasströmung oder bei einer Druckumkehr am Boden, so dass keine Partikel aus dem Festkörperbett durch die Düse zurückströmen können. Die damit verbundenen Nachteile wie Erosion, Korrosion und Reaktion in der Windbox können hierdurch vermieden werden. Zudem braucht der Prozess, der in der Anlage durchgeführt wird, weniger oft unterbrochen zu werden, um die Windbox zu reinigen. Das senkt die Stillstandzeiten und mindert somit Produktionsausfall.

In einer Ausführungsform der Erfindung weist der Schwebekörper auf der in Richtung des Gaszulaufs weisenden Seite eine stetig verlaufende Durchmesserverengung auf. Durch die Durchmesserverengung kann der Schwebekörper gleichzeitig als Schließelement wirken und die Gasverteilerdüse verschließen, wenn die Gasströmung zu gering wird. Hierzu liegt der Schwebekörper bei geringer Gasgeschwindigkeit der Gasströmung auf einem Sitz auf und verschließt auf diese Weise die Gasverteilerdüse. Es kann somit weder Gas in das Festkörperbett geblasen werden, noch können Partikel aus dem Festkörperbett rückströmen. Der Sitz ist dabei vorzugsweise in Form eines ringförmigen Anschlags gestaltet, auf dem der Schwebekörper aufsitzen kann.
Um zu realisieren, dass der Schwerpunkt des Schwebekörpers unterhalb dem Kraftangriffspunkt der Widerstandskraft der Gasströmung liegt, umfasst der Schwebekörper auf seiner dem Gaszulauf abgewandten Seite einen Hohlraum Der Hohlraum führt zu einer deutlichen Massereduktion, so dass hierdurch der Schwerpunkt zu einer niedrigeren Position in Richtung des Anschlags verschoben wird. Zusätzlich ist es möglich, auf der in Richtung des Gaszulaufs weisenden Seite des Schwebekörpers eine massive Spitze aus einem Material mit einer höheren Dichte im Vergleich zur Dichte des Materials des Schwebekörpers vorzusehen, um den Schwerpunkt auch hierdurch weiter in Richtung des Gaszulaufs zu verschieben. Der Hohlraum ist einseitig offen das heißt auf der dem Gaszulauf abgewandten Seite, kann Material des Festkörperbettes in den Hohlraum gelangen. Hierdurch nimmt die Masse des Schwebekörpers zu. Je nach Schüttgewicht und Menge der Partikel besteht zum einen die Möglichkeit, dass die Masse des Schwebekörpers soweit zunimmt, dass dieser von der Gasströmung nicht mehr angehoben werden kann. In diesem Fall bleibt die Gasverteilerdüse für den weiteren Betrieb geschlossen und verhindert insbesondere das Eindringen von Partikeln in die Windbox. Zum anderen kann die Massezunahme des Schwebekörpers durch die Partikel unterhalb eines kritischen Wertes bleiben, so dass die Funktion des Schwebekörpers nicht beeinträchtigt wird sondern der Schwebekörper weiterhin durch den einströmenden Gasstrom getragen wird. Die Funktion des Schwebekörpers als Rückschlagsicherung bleibt hierbei unbeeinträchtigt. Das Ansammeln der Partikel im Hohlraum hat den weiteren Vorteil, dass diese Partikel nicht am Schwebekörper vorbei strömen und auf diese Weise die Funktion der Gasverteilerdüse als Rückschlagklappe beeinträchtigen können. Eine solche Beeinträchtigung ergibt sich zum Beispiel, wenn sich Partikel zwischen der Oberfläche des Schwebekörpers und der Düseninnenwand verklemmen. Hierdurch kann ein Spalt zwischen Schwebekörper und Düseninnenwand entstehen und der Schwebekörper kann nicht mehr die Öffnung verschließen, um bei geringer Gasströmung ein Rückströmen von Partikeln zu verhindern.

In einer bevorzugten Ausführungsform ist der Schwebekörper punktsymmetrisch, insbesondere rotationssymmetrisch zur zentralen Achse des Schwebekörpers gestaltet. Besonders bevorzugt ist der Schwebekörper in Form eines Hohlkegels ausgebildet, wobei die Spitze des Kegels massiv gefertigt ist. Dabei kann die massiv gefertigte Spitze entweder aus dem gleichen Material wie der Hohlkegel oder aus einem Material mit einer höheren Dichte als der des Materials des Hohlkegels gefertigt sein. Der Schwebekörper weist dabei im Betrieb mit der Spitze in Richtung des Gaszulaufs, so dass bei einer Unterbrechung der Gasströmung, einer zu geringen Strömungsgeschwindigkeit oder einer Druckumkehr über den Düsenboden der Schwebekörper mit seiner Spitze in den Gaszulauf fällt und diesen so verschließt. Um zu vermeiden, dass der Schwebekörper vollständig in den Gaszulauf fällt, wird der Durchmesser der nach oben weisenden Basis des Kegels größer gewählt als der Durchmesser des Gaszulaufs oder des Anschlags im Gaszulauf, auf dem der Kegel in geschlossenem Zustand aufliegt.

In einer Ausführungsform umfasst der Schwebekörper zusätzlich eine Führungsstange. Durch die Führung mit der Führungsstange wird ebenfalls vermieden, dass der Schwebekörper kippt oder sich in der Gasverteilerdüse radial bewegt, wodurch die Funktion eingeschränkt werden kann. Insbesondere bei einem kippenden Schwebekörper besteht die Gefahr, dass dieser verkantet und so in der Gasverteilerdüse verklemmt, so dass die Funktion - insbesondere die als Rückschlagventil, um bei Unterbrechung der Gasströmung oder einer Druckumkehr die Gasverteilerdüse zu verschließen, um zu vermeiden, dass Partikel in die Windbox gelangen - eingeschränkt wird.

Besonders bevorzugt ist es, wenn die Führungsstange bei einem kegelförmig gestalteten Schwebekörper an der Kegelspitze ausgebildet ist. Durch die Führungsstange an der Kegelspitze wird der Schwerpunkt des Schwebekörpers noch weiter nach unten verschoben und damit der Abstand zum Kraftangriffspunkt der Widerstandskraft der Gasströmung vergrößert.

Um eine axiale Führung des Schwebekörpers zu ermöglichen, wird die Führungsstange vorzugsweise in einem Führungsring geführt. Der Führungsring wird dabei mit mindestens einem Steg an dem Gaszulauf befestigt. Bevorzugt wird der Führungsring mit mehr als einem Steg, beispielsweise mit drei oder vier Stegen befestigt, wodurch die Stabilität des Führungsringes erhöht wird. Insbesondere wird durch die Verwendung von mindestens drei Stegen die Stabilität des Führungsringes gegen ein Verbiegen vergrößert, wobei die Dicke der Stege bevorzugt so gewählt wird, dass die freie Querschnittsfläche des Gaszulaufs um weniger als 25% reduziert wird. Der Führungsring bleibt somit auch bei Belastung an seiner Position.

In einer besonders bevorzugten Ausführungsform ist an der Führungsstange ein Führungsanschlag ausgebildet, der in geöffnetem Zustand an den Führungsring anschlägt. Durch den Führungsanschlag wird die Öffnungsbewegung des Schwebekörpers begrenzt. Hierdurch lässt sich ein Auf- und Abschwingens des Schwebekörpers vermeiden. Das Auf- und Abschwingen ergibt sich durch periodische Wirbelablösungen im Nachlauf des Schwebekörpers bei konstantem Gasstrom. Die Schwingungsfrequenz, mit der der Schwebekörper auf- und abschwingt ist dabei abhängig von den Eigenschaften des Schwebekörpers und des umströmenden Gases. Insbesondere bei Verwendung als Gasverteilerdüse in einer großtechnischen Wirbelbettanlage, in der mehrere hundert Gasverteilerdüsen eingebaut sein können, ist eine Schwingung des Schwebekörpers nicht tolerierbar, da ein Schwingen aller Düsen zu einem Pulsieren des Wirbelbettes führen kann, wodurch die Wirbelbettanlage beschädigt werden kann. Durch den Führungsanschlag, der so ausgebildet ist, dass die maximale Öffnungshöhe des Schwebekörpers nicht erreicht wird, wird der Schwebekörper bei konstanter Gasgeschwindigkeit in seiner oberen Öffnungsposition, nämlich der durch den Führungsanschlag definierten Position, gehalten.

Die kombinierte Funktion der Gasverteilerdüse als Bauteil für die Einbringung des Gasstromes bei konstantem Druckverlust unabhängig von der Gasmenge des Gasstromes und gleichzeitig als Rückschlagventil, um den Gaszulauf bei Unterbrechung des Gasstromes oder einer Druckumkehr zu verschließen, kann zum Beispiel dadurch erreicht werden, dass der Gaszulauf in Form einer Hülse gestaltet ist und der Schwebekörper in der Hülse geführt ist. Die Hülse umfasst vorzugsweise einen Anschlag, auf dem der Schwebekörper in geschlossenem Zustand aufliegt. Der Anschlag ist dabei umlaufend in der Hülse ausgebildet, so dass der Anschlag als Ventilsitz wirkt. Der Anschlag kann zum Beispiel dadurch erhalten werden, dass die Hülse unterhalb des Anschlages in einem kleineren Innendurchmesser und oberhalb in einem größeren Innendurchmesser ausgeführt ist, wobei der Anschlag in diesem Fall zum Beispiel durch eine stufenförmige Erweiterung in der Hülse gebildet wird. Oberhalb des Anschlages ist der Innendurchmesser der Hülse größer als der maximale Durchmesser des Schwebekörpers, um die Gasströmung um den Schwebekörper in der Hülse zu ermöglichen. Im Betrieb strömt das Gas um den Schwebekörper durch die Gasverteilerdüse.

Um einen konstanten Druckverlust einzustellen ist es bevorzugt, wenn die Hülse einen unteren Abschnitt mit einem kleineren Innendurchmesser und einen oberen Abschnitt mit einem größeren Innendurchmesser aufweist, wobei der obere Abschnitt einen in Richtung des Gaszulaufs weisenden abnehmenden Innendurchmesser hat. Über den in Richtung des Gaszulaufs weisenden abnehmenden Innendurchmesser kann der konstante Druckverlust eingestellt werden, solange sich der Schwebekörper noch nicht in seiner konstruktiv definierten Endposition befindet. Die Abgrenzung des unteren Abschnitts vom oberen Abschnitt kann zum Beispiel durch den Anschlag erfolgen, wenn dieser als stufenförmige Erweiterung in der Hülse ausgebildet ist.

Ein zusätzlicher Schutz vor einem Eindringen von Partikeln in den Gaszulauf und in die Windbox lässt sich erzielen, wenn die Gasverteilerdüse zusätzlich eine den Gaszulauf, den Schwebekörper und die Hülse umschließende Haube umfasst, wobei die Haube über ihren Umfang verteilt Öffnungen aufweist und oben geschlossen ist. In diesem Fall strömt das Gas durch den Gaszulauf um den Schwebekörper nach oben, wird am Deckel der Haube umgeleitet und strömt durch die Öffnungen in das Festkörperbett. Die Öffnungen können dabei in einer beliebigen Höhe über den Umfang der Haube verteilt angeordnet sein. Hierbei ist es möglich, die Öffnungen entlang einer radialen Reihe oder auch in mehreren Reihen auszubilden. Auch eine beliebige Verteilung ist möglich. Besonders bevorzugt ist es, eine oder mehrere radial umlaufende Reihen an Öffnungen im unteren Bereich der Haube, also knapp oberhalb des Bodens, in dem die Gasverteilerdüse montiert ist, vorzusehen.

Die erfindungsgemäß ausgestaltete Gasverteilerdüse eignet sich insbesondere für den Einsatz in Wirbelschichtapparaten, Fließbettapparaten oder Wanderbettapparaten. Ganz besonders bevorzugt ist der Einsatz in Wirbelschichtapparaten, insbesondere in Wirbelschichtreaktoren. Derartige Wirbelschichtreaktoren kommen zum Beispiel bei der Anilinherstellung, der Melaminherstellung, der Herstellung von Acrylnitril oder der Chlorproduktion aus Chlorwasserstoff nach dem Deacon-Verfahren zum Einsatz.

Ein Ausführungsbeispiel für eine erfindungsgemäß ausgebildete Gasverteilerdüse ist in den Figuren dargestellt und wird in der nachfolgenden Beschreibung näher erläutert.

Es zeigen:
- Figur 1: eine dreidimensionale Darstellung eines Gaszulaufs mit Schwebekörper,
- Figur 2: eine Schnittdarstellung einer Gasverteilerdüse mit Schwebekörper in geschlossener Position
- Figur 3: die in Figur 2 dargestellte Gasverteilerdüse mit Schwebekörper in geöffneter Position.

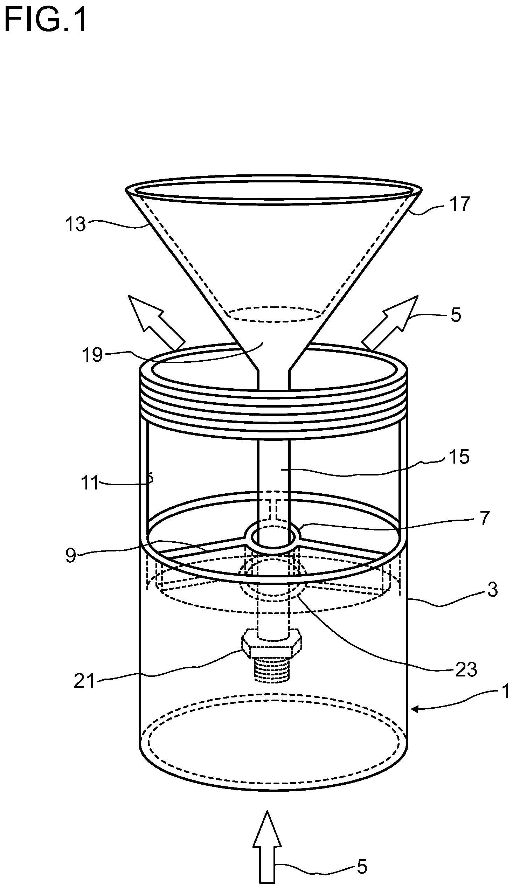

In Figur 1 ist ein Gaszulauf mit Schwebekörper in dreidimensionaler Darstellung gezeigt.

Ein Gaszulauf 1 ist zum Beispiel in Form einer Hülse 3 gestaltet. Das Gas strömt, wie mit Pfeilen 5 gezeigt, von unten in die Hülse 3, wobei die Hülse 3 hierzu zum Beispiel mit einer gasführenden Rohrleitung verbunden ist oder das Ende einer gasführenden Rohrleitung ist. Die Hülse 3 ist vorzugsweise vertikal ausgerichtet, wobei das Gas von unten in die Hülse 3 einströmt und oben aus der Hülse 3 ausströmt.

In der Hülse 3 ist ein Führungsring 7 aufgenommen, wobei der Führungsring 7 mit Stegen 9 an der Innenwand 11 der Hülse 3 befestigt ist. Hierzu ist es zum Beispiel möglich, die Stege 9 an der Innenwand 11 der Hülse anzuschweißen oder auch mit einem Ring zu verbinden, dessen Durchmesser dem Innendurchmesser der Hülse entspricht und mit dem Ring in der Hülse zu verklemmen. Auch jede andere mögliche Befestigungsart, mit der der Führungsring 7 in der Hülse 3 befestigt werden kann, ist denkbar.

Wenn der Führungsring 7 mit Stegen 9 an der Innenwand 11 der Hülse 3 befestigt ist, so werden vorzugsweise mindestens drei Stege 9 vorgesehen, um den Führungsring 7 gegen ein Verschieben und Verbiegen zu stabilisieren.

In dem Führungsring 7 ist ein Schwebekörper 13 mit einer Führungsstange 15 geführt. Der Schwebekörper 13 ist in der hier dargestellten Ausführungsform in Form eines Hohlkegels 17 mit einer massiven Spitze 19 gestaltet. Durch die massive Spitze 19 wird der Schwerpunkt des Hohlkegels 17 in Richtung der Spitze 19 verschoben. Eine weitere Verschiebung des Schwerpunktes ergibt sich durch die Führungsstange 15. Hierdurch wird erreicht, dass der Schwerpunkt des Schwebekörpers 13 tiefer liegt als der Kraftangriffspunkt der Widerstandskraft der Gasströmung. Durch die tiefe Lage des Schwerpunktes stabilisiert sich die Lage des Schwebekörpers 13, wenn dieser beginnt zu kippen. Hierdurch kann vermieden werden, dass der Schwebekörper 13 verkanten kann.

Um das Verkanten zu verhindern, ist es auch möglich, wie hier gestrichelt dargestellt, einen zweiten Führungsring 23 unterhalb des Führungsrings 7 vorzusehen.

An der Führungsstange 15 ist ein Führungsanschlag 21 ausgebildet, zum Beispiel in Form eines auf der Führungsstange 15 ausgebildeten Rings. Dieser kann beispielsweise auf die Führungsstange 15 aufgeschraubt sein. Durch den Führungsanschlag 21 wird die Aufwärtsbewegung des Schwebekörpers 13 bei strömendem Gas nach oben begrenzt. Hierdurch kann, wie vorstehend bereits beschrieben, ein Auf- und Abschwingen des Schwebekörpers verhindert werden.

Im Betrieb wird der Schwebekörper 13 durch die Gasströmung 5 angehoben und gibt so das obere Ende der Hülse 3 frei. Das Gas kann frei aus der Hülse ausströmen. Sobald die Gasgeschwindigkeit einen bestimmten Wert unterschreitet, ganz ausfällt oder eine Druckumkehr auftritt, fällt der Schwebekörper nach unten und schlägt auf dem oberen Ende der Hülse 3 an. Hierdurch wird die Hülse 3 verschlossen, so dass bei Verwendung zur Gaszufuhr in eine Wirbelschicht oder ein Wanderbett verhindert wird, dass Partikel in die Hülse 3 gelangen können.

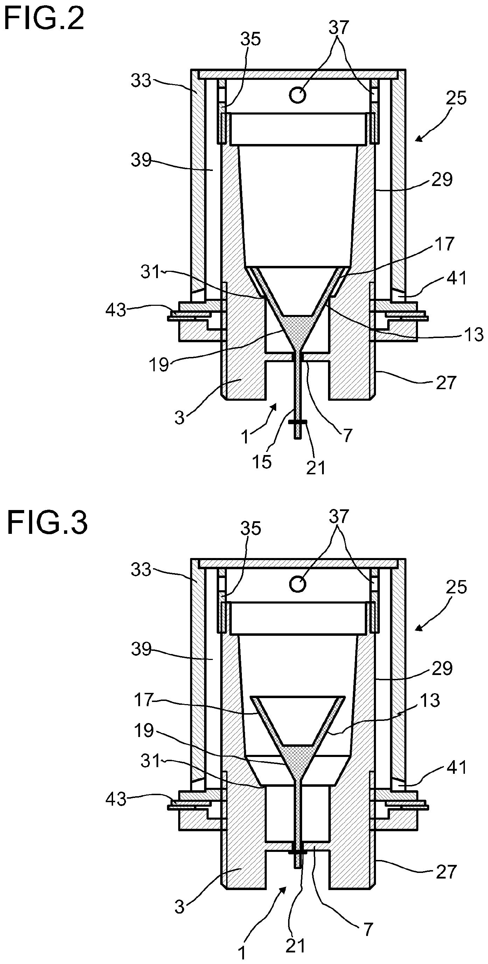

Figur 2 zeigt eine Schnittdarstellung einer Gasverteilerdüse mit Schwebekörper in geschlossener Position und Figur 3 in offener Position.

Die Gasverteilerdüse 25 umfasst eine Hülse 3, wobei die Hülse 3 in der hier dargestellten Ausführungsform einen unteren Abschnitt 27 mit einem kleineren Innendurchmesser und einen oberen Abschnitt 29 mit einem größeren Innendurchmesser. Am Übergang vom unteren Abschnitt 27 zum oberen Abschnitt 29 ist ein Anschlag 31 ausgebildet, auf dem der Schwebekörper 13 bei geschlossener Gasverteilerdüse 25 - wie hier dargestellt - aufliegt. Im unteren Abschnitt 27 ist der Führungsring 7 ausgebildet, in dem die Führungsstange 15 des Schwebekörpers 13 geführt ist.

Um eine Gasströmung zu ermöglichen, ist der Innendurchmesser des oberen Abschnitts 29 größer als der maximale Durchmesser des Schwebekörpers 13.

In der hier dargestellten Ausführungsform ist auf die Hülse 3 eine Haube 33 mit einem innen liegenden Ring 35 aufgeschraubt. Im innen liegenden Ring sind Öffnungen 37 ausgebildet, durch die das Gas in einen Spalt 39 zwischen der Haube 33 und der Hülse 3 strömen kann. Aus dem Spalt 39 strömt das Gas durch Öffnungen 41 aus. Hierbei ist es auch möglich, die Haube 33 so zu gestalten, dass zwischen der Haube 33 und einem Boden 43, in dem die Gasverteilerdüse 25 montiert ist, ein Spalt ausgebildet wird, durch den das Gas strömen kann.

In der in Figur 2 dargestellten Position liegt der Schwebekörper 13 auf dem Anschlag 31 auf und verschließt so den Gaszulauf 1. Hierdurch wird vermieden, dass eine Rückströmung durch die Gasverteilerdüse 25 entsteht, durch die Partikel aus einem Festkörperbett mitgerissen wird. Das Verschließen der Gasverteilerdüse 25 erfolgt automatisch, sobald die Gasgeschwindigkeit nicht mehr ausreichend groß ist, um den Schwebekörper 13 anzuheben.

In Figur 3 ist die Position des Schwebekörpers 13 gezeigt, wenn Gas durch die Gasverteilerdüse 25 strömt. Durch das strömende Gas wird der Schwebekörper 13 so weit angehoben, bis der Führungsanschlag 21 an der Führungsstange 15 am Führungsring 7 anschlägt. Durch die obere Begrenzung wird ein Schwingen des Schwebekörpers 13 verhindert und hierdurch können Druckschwankungen im Gaszulauf 1 reduziert werden, so dass die Gasströmung 5 gleichmäßig bleibt.

Sobald die Gasgeschwindigkeit wieder sinkt, fällt der Schwebekörper 13 wieder nach unten auf den Anschlag 31 und verschließt so den Gaszulauf 1.

### Bezugszeichenliste

- 1: Gaszulauf
- 3: Hülse
- 5: Gasströmung
- 7: Führungsring
- 9: Steg
- 11: Innenwand der Hülse 3
- 13: Schwebekörper
- 15: Führungsstange
- 17: Hohlkegel
- 19: massive Spitze
- 21: Führungsanschlag
- 23: zweiter Führungsring
- 25: Gasverteilerdüse
- 27: unterer Abschnitt
- 29: oberer Abschnitt
- 31: Anschlag
- 33: Haube
- 35: innen liegender Ring
- 37: Öffnungen im innen liegenden Ring 35
- 39: Spalt
- 41: Öffnung
- 43: Boden

## Patentansprüche

1. Gasverteilerdüse, umfassend einen senkrecht nach oben gerichteten Gaszulauf (1) sowie einen Schwebekörper (13), mit dem eine Austrittsöffnung aus dem Gaszulauf (1) verschließbar ist, wenn die Gasgeschwindigkeit einen bestimmten Wert unterschreitet, kein Gas strömt oder eine Druckumkehr auftritt, **dadurch gekennzeichnet, dass** der Schwebekörper (13) auf seiner dem Gaszulauf abgewandten Seite einen einseitig offenen Hohlraum umfasst und einen Schwerpunkt aufweist, der unterhalb eines Kraftangriffspunktes der Gasströmung liegt.

2. Gasverteilerdüse gemäß Anspruch 1, **dadurch gekennzeichnet, dass** der Schwebekörper (13) auf der in Richtung des Gaszulaufs (1) weisenden Seite eine stetig verlaufende Durchmesserverengung aufweist.

3. Gasverteilerdüse gemäß einem der Ansprüche 1 bis 2, **dadurch gekennzeichnet, dass** der Schwebekörper (13) in Form eines Hohlkegels (17) ausgebildet ist, wobei die Spitze (19) des Hohlkegels (17) massiv gefertigt ist.

4. Gasverteilerdüse gemäß einem der Ansprüche 1 bis 3, **dadurch gekennzeichnet, dass** der Schwebekörper (13) eine Führungsstange (15) umfasst.

5. Gasverteilerdüse gemäß Anspruch 3. und 4, **dadurch gekennzeichnet, dass** die Führungsstange (15) an der Spitze (19) des Hohlkegels (17) ausgebildet ist.

6. Gasverteilerdüse gemäß Anspruch 4 oder 5, **dadurch gekennzeichnet, dass** die Führungsstange (15) in einem Führungsring (7) geführt ist.

7. Gasverteilerdüse gemäß Anspruch 6, **dadurch gekennzeichnet, dass** an der Führungsstange (15) ein Führungsanschlag (21) ausgebildet ist, der in geöffnetem Zustand an den Führungsring (7) anschlägt.

8. Gasverteilerdüse gemäß einem der Ansprüche 1 bis 7, **dadurch gekennzeichnet, dass** der Schwebekörper (13) in einer Hülse (3) geführt ist, wobei die Hülse (3) einen Anschlag (31) umfasst, auf dem der Schwebekörper (13) in geschlossenem Zustand aufliegt und einen Durchmesser oberhalb des Anschlags (13) aufweist, der größer ist als der maximale Durchmesser des Schwebekörpers (13).

9. Gasverteilerdüse gemäß Anspruch 8, **dadurch gekennzeichnet, dass** eine den Gaszulauf (1), den Schwebekörper (13) und die Hülse (3) umschließende Haube (33) umfasst ist, wobei die Haube (33) über ihren Umfang verteilt Öffnungen (41) aufweist und oben geschlossen ist.

10. Gasverteilerdüse gemäß Anspruch 8 oder 9, **dadurch gekennzeichnet, dass** die Hülse (3) einen unteren Abschnitt (27) mit einem kleineren Innendurchmesser und einen oberen Abschnitt (29) mit einem größeren Innendurchmesser aufweist, wobei der obere Abschnitt (29) einen in Richtung des Gaszulaufs (1) weisenden abnehmenden Innendurchmesser hat.

11. Reaktor umfassend ein Festkörperbett und mindestens eine Gasverteilerdüse (25) gemäß einem der Ansprüche 1 bis 10, wobei der Reaktor derart ausgestaltet ist, dass aus einer Windbox Gas in das Festkörperbett über die mindestens eine Gasverteilerdüse (25) eingeleitet wird.

12. Reaktor gemäß Anspruch 11,**dadurch gekennzeichnet, dass** das Festkörperbett eine Wirbelschicht, ein Fließbett, oder ein Wanderbett ist.

## Claims

1. A gas distributor nozzle comprising a gas feed (1) directed vertically upwards and a float (13) with which an outlet orifice out of the gas feed (1) may be closed if the gas velocity falls below a given value, no gas is flowing or a pressure reversal occurs, wherein the float (13) comprises a cavity which is open on one side on its side remote from the gas feed and has a center of gravity which is below a point of force application of the gas flow.

2. The gas distributor nozzle according to claim 1, wherein the float (13) has a constantly narrowing diameter on the side facing towards the gas feed (1) .

3. The gas distributor nozzle according to one of claims 1 to 2, wherein the float (13) takes the form of a hollow cone (17), the tip (19) of the cone (17) being solid.

4. The gas distributor nozzle according to one of claims 1 to 3, wherein the float (13) comprises a guide rod (15).

5. The gas distributor nozzle according to claim 3 and 4, wherein the guide rod (15) is formed at the tip (19) of the hollow cone (17).

6. The gas distributor nozzle according to claim 4 or 5, wherein the guide rod (15) is guided in a guide ring (7).

7. The gas distributor nozzle according to claim 6, wherein a guide stop (21) is provided on the guide rod (15) which comes to a stop against the guide ring (7) in the open state.

8. The gas distributor nozzle according to one of claims 1 to 7, wherein the float (13) is guided in a sleeve (3), said sleeve (3) comprising a limit stop (31) on which the float (13) rests in the closed state and having a diameter above the limit stop (31) which is greater than the maximum diameter of the float (13).

9. The gas distributor nozzle according to claim 8, wherein a cap (33) enclosing the gas feed (1), the float (13) and the sleeve (3) is provided, said cap (33) having orifices (41) distributed over its circumference and being closed at the top.

10. The gas distributor nozzle according to claim 8 or 9, wherein the sleeve (3) has a lower portion (27) with a smaller internal diameter and an upper portion (29) with a larger internal diameter, the upper portion (29) having an internal diameter decreasing towards the gas feed (1).

11. A reactor comprising a solid bed and at least one gas distributor nozzle (25) according to one of claims 1 to 10, where the reactor is configured such that gas from a wind box is introduced into the solid bed via the at least one gas distributor nozzle (25).

12. The reactor according to claim 11, wherein the solid bed is a fluidized bed, a fluid bed or a moving bed.

## Revendications

1. Buse de distribution de gaz, comprenant une alimentation en gaz (1) orientée verticalement vers le haut ainsi qu'un flotteur (13) avec lequel une ouverture de sortie hors de l'alimentation en gaz (1) peut être fermée lorsque la vitesse du gaz est en dessous d'une valeur déterminée, qu'aucun gaz ne s'écoule ou qu'il se produit une inversion de pression, **caractérisée en ce que** le flotteur (13) comprend sur son côté opposé à l'alimentation en gaz une cavité ouverte d'un côté et présente un centre de gravité qui est situé en dessous d'un point d'application de force de l'écoulement de gaz.

2. Buse de distribution de gaz selon la revendication 1, **caractérisée en ce que** le flotteur (13) présente, du côté tourné dans la direction de l'alimentation en gaz (1), un rétrécissement de diamètre s'étendant de manière continue.

3. Buse de distribution de gaz selon l'une quelconque des revendications 1 à 2, **caractérisée en ce que** le flotteur (13) est réalisé sous forme de cône creux (17), la pointe (19) du cône creux (17) étant fabriquée sous forme massive.

4. Buse de distribution de gaz selon l'une quelconque des revendications 1 à 3, **caractérisée en ce que** le flotteur (13) comprend une tige de guidage (15) .

5. Buse de distribution de gaz selon les revendications 3 et 4, **caractérisée en ce que** la tige de guidage (15) est réalisée au niveau de la pointe (19) du cône creux (17).

6. Buse de distribution de gaz selon la revendication 4 ou 5, **caractérisée en ce que** la tige de guidage (15) est guidée dans une bague de guidage (7).

7. Buse de distribution de gaz selon la revendication 6, **caractérisée en ce que** la butée de guidage (21) est réalisée au niveau de la tige de guidage (15), laquelle bute contre la bague de guidage (7) dans l'état ouvert.

8. Buse de distribution de gaz selon l'une quelconque des revendications 1 à 7, **caractérisée en ce que** le flotteur (13) est guidé dans une douille (3), la douille (3) comprenant une butée (31) sur laquelle repose le flotteur (13) dans l'état fermé et présente un diamètre au-dessus de la butée (13) qui est supérieur au diamètre maximal du flotteur (13) .

9. Buse de distribution de gaz selon la revendication 8, **caractérisée en ce qu'**un capot (33) entourant l'alimentation de gaz (1), le flotteur (13) et la douille (3) est prévu, le capot (33) présentant des ouvertures (41) réparties sur sa périphérie et étant fermé en haut.

10. Buse de distribution de gaz selon la revendication 8 ou 9, **caractérisée en ce que** la douille (3) présente une portion inférieure (27) de plus petit diamètre intérieur et une portion supérieure (29) de plus grand diamètre intérieur, la portion supérieure (29) présentant un diamètre intérieur diminuant dans la direction de l'alimentation en gaz (1).

11. Réacteur comprenant un lit de matières solides et au moins une buse de distribution de gaz (25) selon l'une quelconque des revendications 1 à 10, le réacteur étant configuré de telle sorte que du gaz soit introduit hors d'une boîte à vent dans le lit de matières solides par le biais de l'au moins une buse de distribution de gaz (25).

12. Réacteur selon la revendication 11, **caractérisé en ce que** le lit de matières solides est une couche fluidisée, un lit fluidisé ou un lit mobile.
